# EUROPEAN PATENT APPLICATION

(11) **EP 4 806 635 A1**
(43) Date of publication of application: **16.09.2026**
(21) Application number: 24888716.8
(22) Date of filing: 06.11.2024
(51) Int. Cl.: B32B 27/00, B32B 27/36, B65D 65/40

(54) **LAMINATE AND PACKAGING CONTAINER**

(30) Priority: 06.11.2023 JP 2023189439
(71) Applicant: Toyo Seikan Co., Ltd., Tokyo 141-8640 (JP)
(72) Inventor: YOSHIKAWA, Seishi, Yokohama-shi, Kanagawa 230-0001 (JP); IMODA, Daisuke, Yokohama-shi, Kanagawa 230-0001 (JP); YASUUMI, Takahiro, Yokohama-shi, Kanagawa 230-0001 (JP); FUJITA, Naoyuki, Yokohama-shi, Kanagawa 230-0001 (JP); MARUYAMA, Tomoya, Yokohama-shi, Kanagawa 230-0001 (JP)
(74) Representative: J A Kemp LLP
(86) International application number: PCT/JP2024/039347
(87) International publication number: WO 2025/100421

(57) **Abstract**

A laminate suitable for re-recycling, which enables, by using a resin recycled from a packaging container or the like made of the laminate of the present invention, the manufacture of a film for a heat-sealing layer similar to the film for a heat-sealing layer in the laminate of the present invention, is provided. The laminate including: at least a base layer having a melting point Tm₁ as an outer layer; and a heat-sealing layer having a melting point Tm₂ as an inner layer, in which 24°C ≤ Tm₁ - Tm₂ ≤ 152°C.

## Description

### Technical Field

The present invention relates to a laminate and a packaging container.

### Background Art

Conventionally, polyethylene terephthalate (hereinafter referred to as "PET") bottles and plastic container packages are the subject of the Containers and Packaging Recycling Act, and horizontal recycling has been established because ordinary PET bottles contain only PET resin as the resin and are therefore easy to recycle. On the other hand, plastic container packages usually contain a plurality of types of resins, and since it is difficult to separate the plurality of types of resins, various problems arise when recycling them.

As an example of the plastic container packaging, a packaging bag using a laminate is known, which is manufactured by using a PET film as a base film and a polyethylene film as a heat-sealing layer, separately forming both films, and then dry-laminating the both films with a urethane adhesive or the like (see, for example, Patent Document 1). Here, for the polyethylene film used in the heat-sealing layer, low-density polyethylene or linear low-density polyethylene is used as a main resin, and the melting point is generally about 110°C, although it depends on the grade of the product. The melting point of PET used for the base film is generally about 260°C, although it depends on the grade of the product.

Therefore, when the recycled resin obtained by crushing the packaging bag is reused to manufacture a film for a heat-sealing layer similar to the film for the heat-sealing layer in the laminate, the molding temperature of the film needs to be set to about 280°C, which is slightly higher than the melting point of PET, because the recycled resin contains PET. However, when the film is formed at about 280°C, the temperature is excessively high for the low-melting-point decomposition products such as paraffin oil and low-molecular compounds contained in the polyethylene film, and therefore, problems arise, such as carbonization of the low-melting-point decomposition products, generation of a large amount of oily smoke during molding, contamination of the extrusion molding roll, and increase in molding pressure during extrusion. Therefore, setting the molding temperature to be lower than 280°C causes PET to melt insufficiently, leading to issues such as fish eyes and pinholes and the like, which degrade film quality.

In addition, a laminate for a packaging container having excellent pinhole resistance using polyamide as a base also has been known (for example, see Patent Document 2). However, since polyamide may be a contraindicated substance when chemical recycling is performed, it is considered that the use of polyamide in the laminate should be avoided as much as possible in consideration of the entire recycling.

### Citation List

### Patent Literature

Patent Document 1: JP 2022-154135 A
Patent Document 2: JP 2022-163548 A

### Summary of Invention

### Technical Problem

In view of the above circumstances, an object of the present invention is to provide a laminate suitable for re-recycling, which enables, by using a resin recycled from a packaging container or the like made of the laminate of the present invention, the manufacture of a film for a heat-sealing layer similar to the film for a heat-sealing layer in the laminate of the present invention.

Yet another object of the present invention is to provide a packaging container formed using the above laminate suitable for re-recycling.

Here, the re-recycling means, by using a recycled resin obtained from "a packaging container or the like manufactured using a recycled resin" as a raw material, manufacturing "the packaging container or the like manufactured using a recycled resin" again.

### Solution to Problem

According to the present invention, a laminate including: at least a base layer having a melting point Tm₁ as an outer layer; and a heat-sealing layer having a melting point Tm₂ as an inner layer, in which 24°C ≤ Tm₁ - Tm₂ ≤ 152°C, is provided.

In the sealant film of the present invention, the following aspects are suitably employed.
(1) The heat-sealing layer includes at least three layers including a recycled layer between two layers made of virgin polyolefin.
(2) The recycled layer has a melting point Tm₃, and Tm₃ ≤ 250°C.
(3) The base layer is made of an oriented film of polybutylene terephthalate.
(4) The virgin polyolefin of the heat-sealing layer is polyethylene, and all of the three layers in the heat-sealing layer are cast films.
(5) Between the base layer and the heat-sealing layer, a vapor-deposited layer in which an inorganic substance or an inorganic oxide is used is used.
(6) At least one of the two layers made of the virgin polyolefin is a colored layer.
(7) The base layer and the heat-sealing layer are laminated using an adhesive.
(8) The laminate is free of polyethylene terephthalate and polyamide.
(9) A packaging container including the laminate.

### Advantageous Effects of Invention

A laminate of the present invention is a laminate including at least a base layer having a melting point Tm₁ as an outer layer and a heat-sealing layer having a melting point Tm₂ as an inner layer, in which 24°C ≤ Tm₁ - Tm₂ ≤ 152°C. The laminate enables, by using a resin recycled from a packaging container or the like made of the laminate, the manufacture of a film for a heat-sealing layer similar to the film for a heat-sealing layer in the laminate and thus is suitable for re-recycling. Here, by setting the difference between the melting point Tm₁ and the melting point Tm₂ within the above numerical range, it is possible to set a low molding temperature during recycling. Therefore, problems such as carbonization of low-melting-point decomposition products contained in the polyethylene film, generation of oily smoke, contamination of the extrusion molding rolls, and an increase in molding pressure during extrusion can be prevented.

Further, in the laminate of the present invention having the above-mentioned layer structure, by utilizing the layer structure and forming a vapor-deposited layer in which an inorganic substance or an inorganic oxide is used between the base layer and the heat-sealing layer, the gas barrier properties of the laminate can be improved. Further, by using at least one of the two layers made of virgin polyolefin as a colored layer, the appearance characteristics can be improved.

### Brief Description of Drawings

FIG. 1 is a schematic cross-sectional side view illustrating a layer structure of a laminate according to a first embodiment of the present invention.
FIG. 2 is a schematic cross-sectional side view illustrating a layer structure of a laminate according to a second embodiment of the present invention.
FIG. 3 is a schematic cross-sectional side view illustrating a layer structure of a laminate according to a third embodiment of the present invention.
FIG. 4 is a schematic cross-sectional side view illustrating a layer structure of a laminate according to a fourth embodiment of the present invention.
FIG. 5 is a schematic view illustrating an example of a liquid refill pouch as an example of a packaging container according to the present invention.

### Description of Embodiments

Embodiments of the present invention will be described below with reference to the drawings. However, the present invention is not limited to the embodiments. Since the laminate of the present invention is used for a heat-sealed packaging container, a heat-sealing layer side is an inner layer and a base layer side is an outer layer in the packaging container.

### Laminate

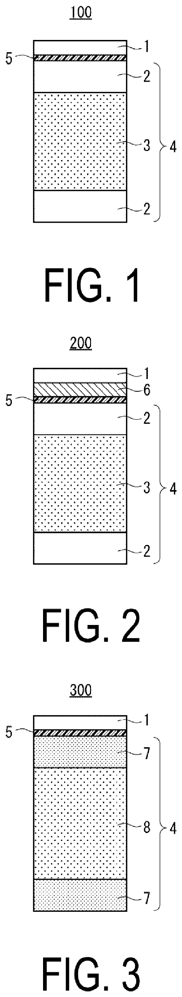

FIG. 1 is a schematic cross-sectional side view illustrating a layer structure of a laminate according to a first embodiment of the present invention, and illustrates a laminate 100 in which a heat-sealing layer 4 includes three layers including a recycled layer 3 between two layers formed of virgin polyolefin layers 2, and the heat-sealing layer 4 and a base layer 1 are dry-laminated by an adhesive layer 5. Here, from the viewpoint of improving the thermal conductivity to the heat-sealing layer 4 during heat sealing, the thickness of the base layer 1 is preferably 40 µm or less, and more preferably 30 µm or less. The lower limit of the thickness is not particularly limited, but is preferably set to, for example, 1 µm or more. Further, from the viewpoint of achieving sufficient adhesion during heat sealing, the thickness of the heat-sealing layer 4 is preferably 50 µm or more, and more preferably 60 µm or more. The upper limit of the range of the thickness of the heat-sealing layer 4 is not particularly limited, but is preferably 500 µm or less, and more preferably 400 µm or less, for example. The thickness of the recycled layer 3 is not particularly limited, but is preferably 2 to 400 µm, and more preferably 10 to 200 µm. The thickness of the adhesive layer 5 is not particularly limited, but is preferably 0.1 to 30 µm, for example.

The virgin polyolefin layer 2 is manufactured using virgin polyolefin. The virgin polyolefin is not particularly limited as long as it is a virgin polyolefin having heat-sealability, but it is preferable to use polyethylene selected from low-density polyethylene (LDPE) or linear low-density polyethylene (LLDPE), or cast polypropylene (CPP), and it is more preferable to use the above-mentioned polyethylene. In addition, different polyolefins may be mixed and used, such as mixing and using a low-density polyethylene (LDPE) and a linear low-density polyethylene (LLDPE). Furthermore, the virgin polyolefin may be derived from a petroleum raw material, a plant raw material, or a mixture of these. In addition, it is preferable that all of the three layers in the heat-sealing layer 4 are cast films because of excellent heat-sealability.

The recycled layer 3 contains a so-called recycled resin obtained by subjecting, as a raw material, a recovered used plastic packaging container or the like or a material recovered from a waste material at the time of manufacturing a plastic packaging container or the like to various processes such as pulverization, washing with an alkali or the like, filtration in a molten state, and extraction with an organic solvent. Here, the recycled resin preferably does not contain PET in order to lower the molding temperature at the time of film molding, and preferably contains almost no polyamide which may be a contraindicated substance in a case of chemical recycling. Since the resin used is clear, it is preferable to use a recycled resin obtained from a material recovered from a waste material or a product during the manufacture of the laminate of the present invention, and it is more preferable to use a recycled resin obtained from a material recovered from a waste material during the manufacture of the virgin polyolefin layer 2.

Here, "contains almost no polyamide" means that the polyamide is not contained, or even if polyamide is contained, the content of the polyamide is 5 mass% or less with respect to the total amount of the recycled resin.

The heat-sealing layer 4 contains a recycled resin in the recycled layer 3, and if the proportion of the recycled resin used increases, the amount of the virgin polyolefin used in the heat-sealing layer 4 and the like becomes relatively small, and therefore, the heat-sealability and other physical properties significantly deteriorate. Thus, from the viewpoint of avoiding such a physical properties deterioration, the recycled resin content in the heat-sealing layer 4 is preferably 15 to 90 mass% and more preferably 15 to 60 mass%.

In addition, in terms of more reliably avoiding a decrease in heat-sealability of the heat-sealing layer 4, for example, when the thickness of the recycled layer 3 is 100 µm, the thickness of virgin polyolefin layers 2 on both the upper and lower sides is preferably set to approximately 10 to 60 µm (10 to 60% with respect to the thickness of the heat-sealing layer 4).

Further, the recycled layer 3 may be formed solely from the recycled resin, but preferably contains virgin polyolefin, and on the premise that the numerical range of the amount of recycled resin in the heat-sealing layer 4 and the thickness ratio of the recycled layer 3 to the virgin polyolefin layer 2 on both upper and lower sides are satisfied, the mass ratio of the recycled resin to the virgin polyolefin is preferably in the range recycled resin:virgin polyolefin = 99:1 to 25:75. Here, for a ratio of 50:50, the dilution is two-fold, and for a ratio of 25:75, the dilution is four-fold. Here, the recycled layer 3 is formed by co-extrusion molding using recycled resin-containing pellets and virgin polyolefin pellets. Further, since polyolefin deteriorates at a molding resin temperature of 250°C or higher, a melting point Tm₃ of the recycled layer 3 is preferably, for example, Tm₃ ≤ 250°C, more preferably Tm₃ ≤ 240°C, and particularly preferably Tm₃ ≤ 230°C. The virgin polyolefin used in the recycled layer 3 is preferably the same as the virgin polyolefin used in the virgin polyolefin layer 2, but may be different.

Moreover, the recycled layer 3 contains components such as resins such as polyester, adhesive, and colorant. Therefore, in order to prevent a decrease in strength due to a decrease in molecular weights caused by these components and the like, an ester decomposition inhibitor, such as a carbodiimide compound, and a compatibilizer for improving dispersibility may be contained. Examples of the polar group of the compatibilizer include an organic isocyanate group, a carboxylic acid anhydride group, a carboxylic acid group, an amino group, a hydroxy group, an epoxy group, and an acrylic ester group, and an acid-modified olefin-based resin, an imine-modified olefin-based resin, an acrylic ester-glycidyl methacrylate copolymerized olefin-based resin, or saponified ethylene-vinyl acetate copolymers is suitable.

In addition, a lubricant, an ultraviolet absorber, a plasticizer, a crystal nucleating agent, a filler, a hydrolysis inhibitor, a flame retardant, an antistatic agent, an antifogging agent, or an anti-blocking agent may be blended as long as the physical properties are not impaired.

The base layer 1 has a melting point Tm₁, and a resin having a melting point Tm₁ lower than approximately 260°C, which is the melting point of PET, can be used, and examples thereof include polybutylene terephthalate (melting point 230°C), high-density polyethylene (melting point 130 to 150°C), oriented polypropylene (OPP, melting point 165°C), polystyrene (melting point 240°C), polyvinylidene chloride (melting point 210°C), polychlorotrifluoroethylene (melting point 220°C), acetyl cellulose (melting point 230°C), polysulfone (melting point 200°C), polycarbonate (melting point 150°C), polyacetal (melting point 181°C), ethylene-vinyl alcohol copolymer (melting point 160 to 183°C), polyvinyl alcohol (melting point 200°C). Among them, polybutylene terephthalate, polystyrene, polyvinylidene chloride, polychlorotrifluoroethylene, and acetyl cellulose having a melting point ranges from 210 to 240°C are preferable, and polybutylene terephthalate is more preferable. These may be used alone or in combination.

The present invention is the laminate including at least a base layer having the melting point Tm₁ as an outer layer and a heat-sealing layer having a melting point Tm₂ as an inner layer, wherein 24°C ≤ Tm₁ - Tm₂ ≤ 152°C. For example, Tm₁ - Tm₂ in a case of using uniaxially-oriented high-density polyethylene (melting point Tm₁: 134°C) for the base layer and cast low-density polyethylene (melting point Tm₂: 110°C) for the heat-sealing layer is 24 (134 - 110 = 24)°C, and Tm₁ - Tm₂ in a case of replacing the base layer with polybutylene terephthalate (melting point Tm₁: 225°C) is 115 (225 - 110 = 115)°C. Here, the melting point was measured by using a differential scanning calorimeter (DSC).

Further, Tm₁ - Tm₂ is more preferably 51°C ≤ Tm₁ - Tm₂ ≤ 125°C. For example, in a case where oriented polypropylene (melting point Tm₁: 165°C) is used for the base layer and cast low-density polyethylene (melting point Tm₂: 110°C) is used for the heat-sealing layer, Tm₁ - Tm₂ is 55 (165 - 110 = 55)°C.

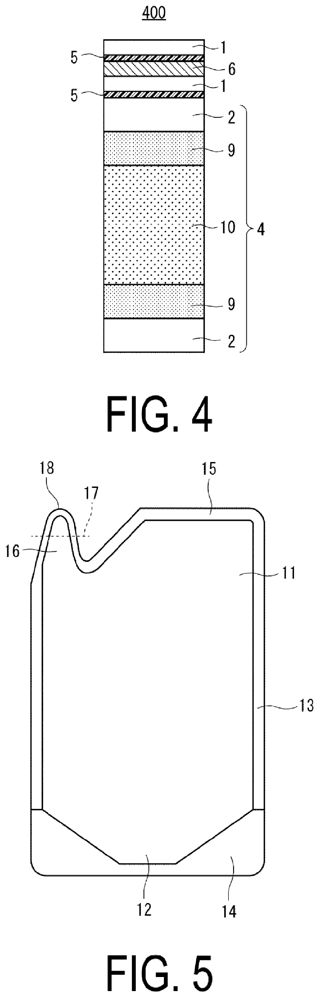

The heat-sealing layer 4 is manufactured by cast film production using three or five extruders to manufacture a laminate formed of two-kind three layers of two virgin polyolefin layers 2 and the recycled layer 3, or a laminate formed of three-kind five layers as illustrated in FIG. 4 described below, in which the respective components are dry blended, the resulting blend is fed into an extruder and melt-kneaded, the resulting melt-kneaded blend is co-extruded into a film form from a T-die, the extruded melt in two-kind three layer or three-kind five layer film form is brought into contact with a cooling roll and solidified, and the resulting solidified film is wound into a roll. Each component may be fed in the form of film-like crushed pieces, pellets, granules, or liquid. Here, the film-like crushed pieces may be film scraps generated in the process of carrying out the present invention. In inflation molding generally used for forming a heat-sealant film, in which a bag-shaped film is extrusion-molded, a polyolefin-incompatible foreign substance if present would be likely to cause perforation or uneven thickness, and if the material is passed through a mesh filter with a fine mesh opening for the purpose of removing a foreign substance, the production rate would be significantly reduced. In contrast to that, cast film production easily obtains a high-quality film with no perforation and less uneven thickness and does not need to pass the material through a mesh filter with a fine opening, and thus can prevent a decrease in production rate. Here, the heat-sealing layer 4 is not limited to the two-kind three layers or the three-kind five layers, and the number of kinds and the number of layers may be used as needed, but it is preferable that the heat-sealing layer 4 is formed of at least three layers because the recycled layer 3 is included.

The base layer 1 is formed separately from the heat-sealing layer 4 by a known means or method using an extruder or the like. Since the base layer 1 is used as an outer layer, improvement in film strength, thermal characteristics, and the like is required, and thus the base layer 1 is preferably an oriented film, and the orientation may be either uniaxial-orientation or biaxial-orientation, and the biaxial-orientation is more preferably used since the film strength and the like are further improved.

The base layer 1 and the heat-sealing layer 4 are laminated by using an adhesive layer 5 made of an adhesive. Examples of the adhesive include known adhesives such as urethane adhesives, epoxy adhesives, acid-modified polyolefin adhesives, polyester adhesives, polyether adhesives, and polyamide adhesives. The adhesive layer 5 may contain one or more of these adhesives. It is preferable to contain a urethane adhesive because it is flexible and strong against impact.

FIG. 2 is a schematic cross-sectional side view illustrating a layer structure of a laminate according to a second embodiment of the present invention, and illustrates a laminate 200 including a vapor-deposited layer 6 using an inorganic substance or an inorganic oxide on a surface on the heat-sealing layer 4 side of the base layer 1 in addition to the layer structure of the first embodiment illustrated in FIG. 1.

As the inorganic substance, an inorganic substance such as silicon (Si), aluminum (Al), magnesium (Mg), calcium (Ca), potassium (K), tin (Sn), sodium (Na), boron (B), titanium (Ti), lead (Pb), zirconium (Zr), yttrium (Y), or the like may be used, and aluminum (Al) is preferable as a substance suitable for a packaging container.

As the inorganic oxide, those represented by MO_{X} such as SiO_{X} and AlO_{X} (wherein M represents an inorganic element, and the range of each value of X varies depending on the inorganic element) can be used. Here, the value of X can range from 0 to 2 for silicon (Si), 0 to 1.5 for aluminum (Al), 0 to 1 for magnesium (Mg), 0 to 1 for calcium (Ca), 0 to 0.5 for potassium (K), 0 to 2 for tin (Sn), 0 to 0.5 for sodium (Na), 0 to 1.5 for boron (B), 0 to 2 for titanium (Ti), 0 to 1 for lead (Pb), 0 to 2 for zirconium (Zr), and 0 to 1.5 for yttrium (Y). However, in the above, in a case where X = 0, the compound is a complete inorganic substance and is not an inorganic oxide, and thus is excluded. As a material suitable for the packaging container, silicon oxide or aluminum oxide is preferable, and SiO₂ or AlO₂ is particularly preferable because of its transparent appearance.

The vapor-deposited layer 6 is formed by using a known technique such as plasma CVD, and can enhance the gas barrier properties of the laminate, and also has an effect and a function of hiding coloring caused by the recycled resin when the laminate 200 is used for a packaging container. Such a vapor-deposited layer 6 is a thin layer with a thickness approximately of 0.001 to 1 µm. For the purpose of further enhancing the gas barrier performance, a cross-linking reaction coating film of a carboxylic acid and a metal or a coating film in which a metal oxide is dispersed may be contained on the above thin layer.

FIG. 3 is a schematic cross-sectional side view illustrating a layer structure of a laminate according to a third embodiment of the present invention, and illustrates a laminate 300 similar to the layer structure of the first embodiment illustrated in FIG. 1, but in which the heat-sealing layer 4 is formed of three layers having, between two layers made of a colored virgin polyolefin layer 7 containing a coloring pigment, a re-recycled layer 8 containing a recycled resin using a packaging container made of the laminate of the present invention as a raw material, and the heat-sealing layer 4 and the base layer 1 are dry-laminated by the adhesive layer 5. Here, the colored virgin polyolefin layer 7 and the re-recycled layer 8 may have the same thickness, material composition, and the like as those of the virgin polyolefin layer 2 and the recycled layer 3, respectively, except that the colored virgin polyolefin layer 7 contains a coloring pigment and the re-recycled layer 8 contains a recycled resin obtained by using a packaging container made of the laminate of the present invention as a raw material. The colored virgin polyolefin layer 7 has an effect and a function of hiding the coloring caused by a recycled resin when the laminate 300 is used for a packaging container. In addition, the laminate 300 has the colored virgin polyolefin layer 7 on both sides of the re-recycled layer 8, but the virgin polyolefin layer 2 containing no coloring pigment may be used on one side. In this case, in order to exhibit the above-described effect and function, it is preferable that the colored virgin polyolefin layer 7 is on the outer layer side of the re-recycled layer 8 and the virgin polyolefin layer 2 is on the inner layer side.

As the coloring pigment contained in the colored virgin polyolefin layer 7, known coloring pigments can be used, including white pigments such as titanium oxide, zinc white, and calcium carbonate, black pigments such as carbon black and iron black, red pigments such as red iron oxide, cadmium red, and molybdenum orange, blue pigments such as cobalt aluminate and prussian blue, and yellow pigments such as cadmium yellow. In a case where a printed layer of a trade name, a pattern, or the like is provided on either one of both surfaces of the base layer 1, it is preferable to use a white pigment in consideration of the fact that the colored virgin polyolefin layer 7 serves as a printing base layer.

FIG. 4 is a schematic cross-sectional side view illustrating a layer structure of a laminate according to a fourth embodiment of the present invention, and illustrates a laminate 400 in which the base layer 1 having a printed layer (not illustrated) on the lower surface thereof, the base layer 1 having the vapor-deposited layer 6 on the upper surface thereof, and the heat-sealing layer 4 are dry-laminated by two adhesive layers 5. Here, the heat-sealing layer 4 is formed of five layers including two layers of a re-recycled white virgin polyolefin layer 9 containing a recycled resin in which a packaging container made of the laminate of the present invention is used as a raw material and a white pigment, in contact with the inner side of each of the two layers made of the virgin polyolefin layer 2, and a mixed recycled layer 10 containing, on the inner side of the two layers, a recycled resin contained in the recycled layer 3, a recycled resin in which a packaging container made of the laminate of the present invention is used as a raw material, and a virgin polyolefin. In a case where the recycled resin is colored to a large extent, the re-recycled white virgin polyolefin layer 9 may possibly cause a problem of impairing the appearance of the laminate 400, and therefore, in order to avoid the problem, in the case where the recycled resin is colored to a large extent, the re-recycled white virgin polyolefin layer 9 may contain only the white pigment without containing the recycled resin.

The laminates 100 to 400 according to the first to fourth embodiments are not limited to the respective embodiments, and the respective layers can be used in combination as appropriate as necessary. For example, the vapor-deposited layer 6 in the laminate 200 can be combined with the laminate 300, the colored virgin polyolefin layer 7 in the laminate 300 can be combined in place of the virgin polyolefin layer 2 in the laminates 100 and 200, the heat-sealing layer 4 in the laminate 400 can be combined in place of the heat-sealing layer 4 in the laminates 100 to 300, and the like.

In the laminate of the present invention having the layer structure described above, each layer may contain known additives used in ordinary resins, such as a deodorant, an antioxidant, a lubricant, a modifier, and an anti-blocking agent, as components other than the resin.

### Packaging Container

FIG. 5 is a schematic view illustrating an example of a liquid refill pouch as an example of a packaging container according to the present invention. The liquid refill pouch has a body portion 11 and a bottom portion 12, the body portion 11 being made of two laminates according to the present invention and the bottom portion 12 being made of one laminate according to the present invention or a laminate made of virgin material. A side seal 13 and a top seal 15 are formed by heat-sealing the two laminates constituting the body portion 11. A bottom seal 14 is formed by heat-sealing the two laminates constituting the body portion 11 and the one laminate constituting the bottom portion 12. A nozzle portion 16 protruding upward is provided at one corner of an upper portion of the body portion 11. The nozzle portion 16 is provided with a tear-off line 17, and by tearing off a tip portion 18 of the nozzle portion 16 along the tear-off line 17 and opening, a spout through which the content is extracted is formed. The spout is inserted into a pouring port of another container such as a plastic bottle or a glass bottle, and the refill pouch is inclined, whereby the content can be poured into the other container. Examples of the contents of the liquid refill pouch include a detergent, a bleaching agent, a softening agent, a washing paste, a shampoo, a rinse, a cosmetic, and a deodorant.

The method of manufacturing a packaging container according to the present invention includes a step of heat-sealing the laminate according to the present invention. In the manufacturing method, since the packaging container is manufactured using the laminate according to the present invention, a packaging container having excellent heat-sealability and high seal strength in a sealing portion is obtained. In addition, since the melting of the surface can be suppressed during heat sealing, a packaging container having a good appearance can be obtained.

An example of the method of manufacturing a packaging container according to the present invention will be described below. First, two laminates according to the present invention are prepared and layered such that the heat-sealing layers face each other. Next, a seal bar set at a predetermined temperature is applied to the surface of the base layer corresponding to the sealing portion. The temperature at which the laminate is heat-sealed depends on the melting point Tm₁ of the base layer. However, from the viewpoint of sufficiently melting the heat-sealing layer and obtaining high sealing strength, the temperature is preferably 130°C or higher, more preferably 145°C or higher, and even more preferably 160°C or higher. The sealing portion can be formed leaving one side for filling the content. Thus, a packaging container is obtained. Thereafter, the content is filled from the remaining one side which is opened, and the one side is heat-sealed, thereby obtaining a packaging container filled with the content.

### Examples

The present invention will be described in detail with examples below. However, the present invention is not limited to the examples.

### Resin Used

Base resin A: Polybutylene terephthalate Melting point 225°C
Base resin B: Polyethylene terephthalate Melting point 260°C
Heat-sealant resin C: Linear low-density polyethylene (LLDPE) Melting point 107°C

The difference (Tm₁ - Tm₂) between the melting point of the base resin A (Tm₁) and the melting point of the heat-sealant resin C (Tm₂) is calculated to be 118°C (225 - 107 = 118), and the difference (Tm₁ - Tm₂) between the melting point of the base resin B (Tm₁) and the melting point of the heat-sealant resin C (Tm₂) is calculated to be 153°C (260 - 107 = 153).

### Extrusion Test

Under the extrusion conditions shown in Table 1, using a twin-screw kneading extruder ULT nano manufactured by Technovel Corporation, extrusion molding was performed using mixed pellets of the pellets of the base resin A or B and the pellets of the heat-sealant resin C as a raw material resin, the change in the resin pressure over time was measured by a sensor provided in the die, and evaluation was performed using the change in the resin pressure over time of an extrusion test using only the pellets of the heat-sealant resin C as a control. The wire meshes were arranged in the order of 120 mesh/40 mesh from the upstream side. C1 to C5 in Table 1 indicate set temperatures of the heaters in the respective portions from the C1, which is the portion near the hopper in the screw, to the C5, which is the portion near the die. The temperature of the die is the molding temperature.

**[Table 1]**

| | C1 (°C) | C2 (°C) | C3 (°C) | C4 (°C) | C5 (°C) | Die (°C) | Screw rotation speed (r.p.m.) |
|---|---|---|---|---|---|---|---|
| Extrusion conditions (1) | 150 | 245 | 245 | 245 | 245 | 245 | 50 |
| Extrusion conditions (2) | 150 | 280 | 280 | 280 | 280 | 280 | 50 |

### Control Experiment

The pellets of the heat-sealant resin C were solely used to perform an extrusion test under the extrusion condition (1), and the change in resin pressure was recorded every 10 minutes for 40 minutes, and shown in Table 2. The resin pressure did not rise.

### Example 1

An extrusion test was performed under the extrusion conditions (1) using a mixed resin obtained by mixing the pellets of each of the base resin A and the heat-sealant resin C in advance at a weight ratio of 20/80. The change in resin pressure was recorded for 40 minutes and is shown in Table 2. As in the control experiment, there was no particular increase in resin pressure.

### Comparative Example 1

An extrusion test was performed under the extrusion conditions (1) using a mixed resin obtained by mixing the pellets of each of the base resin B and the heat-sealant resin C in advance at a weight ratio of 20/80. The change in resin pressure was recorded for 40 minutes and is shown in Table 2. Unlike the control experiment, after 30 minutes, the resin pressure increased and surging occurred, in which the amount of resin discharged from the extruder became unstable. This was considered to be because the molding temperature in the mixed resin with respect to the base resin B was too low.

### Comparative Example 2

An extrusion test was performed under the extrusion conditions (2) using a mixed resin obtained by mixing the pellets of each of the base resin B and the heat-sealant resin C in advance at a weight ratio of 20/80. Although the change in resin pressure was recorded, the test was stopped before 10 minutes had elapsed because a large amount of oily smoke was emitted from the tip of the extruder. This was considered to be because the molding temperature in the mixed resin with respect to the heat-sealant resin C was too high.

**[Table 2]**

| | Difference (Tm₁ - Tm₂) (°C) between melting point of base resin (Tm₁) and melting point of heat-sealant resin (Tm₂) | Change in resin pressure over time (MPa) | | | | |
|---|---|---|---|---|---|---|
| | | Start of extrusion | After 10 minutes | After 20 minutes | After 30 minutes | After 40 minutes |
| Control experiment | - - - | 2.2 | 2.4 | 2.4 | 2.4 | 2.4 |
| Example 1 | 118 | 2.3 | 2.2 | 2.4 | 2.4 | 2.4 |
| Comparative Example 1 | 153 | 2.2 | 2.0 | 2.0 | 2.7 | 2.9 |

From the results of Example 1 and Comparative Example 1, when the difference "Tm₁ - Tm₂" between the melting point of the base resin A (Tm₁) and the melting point of the heat-sealant resin C (Tm₂) was 118°C, the mixed resin of the base resin and the heat-sealant resin could be extrusion-molded under the same extrusion conditions as in a case of using the heat-sealant resin alone. However, when the above "Tm₁ - Tm₂" was 153 °C, it was difficult to extrusion-mold the mixed resin of the base resin and the heat-sealant resin under the same extrusion conditions as in the case of using the heat-sealant resin alone.

### Reference Signs List

1: Base layer
2: Virgin polyolefin layer
3: Recycled layer
4: Heat-sealing layer
5: Adhesive Layer
6: Vapor-deposited layer
7: Colored virgin polyolefin layer
8: Re-recycled layer
9: Re-recycled white virgin polyolefin layer
10: Mixed recycled layer
11: Body portion
12: Bottom portion
13: Side seal
14: Bottom seal
15: Top seal
16: Nozzle portion
17: Tear-off line
18: Tip portion
100: Laminate of first embodiment
200: Laminate of second embodiment
300: Laminate of third embodiment
400: Laminate of fourth embodiment

## Claims

1. A laminate comprising: at least a base layer having a melting point Tm₁ as an outer layer; and a heat-sealing layer having a melting point Tm₂ as an inner layer, wherein 24°C ≤ Tm₁ - Tm₂ ≤ 152°C.

2. The laminate according to claim 1, wherein the heat-sealing layer includes at least three layers including a recycled layer between two layers made of virgin polyolefin.

3. The laminate according to claim 2, wherein the recycled layer has a melting point Tm₃, and Tm₃ ≤ 250°C.

4. The laminate according to claim 1 or 2, wherein the base layer is made of an oriented film of polybutylene terephthalate.

5. The laminate according to claim 2, wherein the virgin polyolefin of the heat-sealing layer is polyethylene, and all of the three layers in the heat-sealing layer are cast films.

6. The laminate according to claim 1 or 2, further comprising, between the base layer and the heat-sealing layer, a vapor-deposited layer in which an inorganic substance or an inorganic oxide is used.

7. The laminate according to claim 2, wherein at least one of the two layers made of the virgin polyolefin is a colored layer.

8. The laminate according to claim 1 or 2, wherein the base layer and the heat-sealing layer are laminated using an adhesive.

9. The laminate according to claim 1 or 2, wherein the laminate is free of polyethylene terephthalate and polyamide.

10. A packaging container comprising the laminate according to claim 1 or 2.
